**Europäisches Patentamt**

**European Patent Office**

**Office européen des brevets**

(19)

(11) **EP 0 750 176 B1**

(12) **FASCICULE DE BREVET EUROPEEN**

(45) Date de publication et mention
de la délivrance du brevet:
**24.04.2002 Bulletin 2002/17**

(51) Int Cl.⁷: **G01C 19/56**

(21) Numéro de dépôt: **96109450.5**

(22) Date de dépôt: **13.06.1996**

(54) **Dispositif de mesure d'une vitesse angulaire**

Vorrichtung zum Messen einer Winkelgeschwindigkeit

Apparatus for measuring an angular speed

(84) Etats contractants désignés:
**CH DE ES GB IT LI NL SE**

(30) Priorité: **21.06.1995 FR 9507416**

(43) Date de publication de la demande:
**27.12.1996 Bulletin 1996/52**

(73) Titulaire: **ASULAB S.A.**
**2074 Marin (CH)**

(72) Inventeurs:
• **Farine, Pierre-André**
**2003 Neuchâtel (CH)**
• **Etienne, Jean-Daniel**
**2206 Les Geneveys-sur-Coffrane (CH)**
• **Dalla Piazza, Silvio**
**2610 Saint-Imier (CH)**

(74) Mandataire: **Thérond, Gérard Raymond et al**
**I C B**
**Ingénieurs Conseils en Brevets SA**
**Rue des Sors 7**
**2074 Marin (CH)**

(56) Documents cités:
**EP-A- 0 494 588        EP-A- 0 503 807**
**US-A- 3 258 617**

**Description**

La présente invention concerne un dispositif de mesure d'une vitesse angulaire comportant :

- un transducteur destiné à tourner à ladite vitesse angulaire ;
- des moyens pour générer une vibration mécanique dudit transducteur en réponse à un signal d'excitation, cette vibration mécanique comportant une composante parasite, et au moins une composante utile ayant une amplitude représentative de ladite vitesse angulaire ;
- des moyens pour produire un signal électrique de détection représentatif de ladite vibration mécanique et comportant également une composante parasite et au moins une composante utile ayant une amplitude représentative de ladite vitesse angulaire ;

L'invention concerne également un procédé de traitement des signaux d'excitation et de détection pour faciliter la mesure de la composante utile du signal de détection.

L'invention s'applique notamment à la détermination de la composante utile du signal de détection électrique fourni par un gyromètre à diapason en réponse à un signal d'excitation, du fait de la force de Coriolis agissant sur le diapason.

Les gyromètres à diapason ont tendance à s'imposer pour la détermination de la vitesse angulaire d'un objet en mouvement, du fait de leur petite taille et de leur faible coût. Des gyroscopes complexes et onéreux sont depuis longtemps utilisés, notamment dans les avions ou les missiles, où ils servent à suivre l'orientation de l'avion ou du missile par rapport à un référentiel fixe.

Mais, avec les possibilités de miniaturisation liées au gyroscope à diapason, de nouvelles applications sont envisagées, notamment dans le domaine automobile, où ils peuvent être intégrés dans des dispositifs d'antidérapage ou de correction d'assiette.

Un dispositif de mesure d'une vitesse angulaire à l'aide d'un diapason en quartz a été décrit dans le brevet EP-B-0 515 981, du même demandeur. Dans un gyromètre à diapason en quartz, les branches du diapason sont pourvues d'électrodes pour l'application d'un signal d'excitation, et d'électrodes pour la détection d'un signal de détection qui correspond à la réponse du diapason lors de sa mise en rotation autour de son axe longitudinal.

Certains documents de l'état de la technique, notamment le EP 0 494 588, font état du fait que le bon fonctionnement d'un gyromètre à diapason dépend d'une part de l'implantation des électrodes d'excitation et de détection sur le diapason, permettant de minimiser le couplage entre le signal d'excitation et le signal de détection, et d'autre part, de la qualité des moyens de traitement électronique associés au diapason pour pleinement exploiter la composante utile, typiquement très faible, due à la force de Coriolis lors du mouvement du gyromètre.

Or, les gyromètres connus sont dans l'état actuel de la technique pénalisés par la difficulté de mesurer la partie utile du signal détecté correspondant à la force de Coriolis, et ce d'autant plus que la vitesse de rotation du gyromètre est faible.

Le document antérieur EP 0 503 807 décrit un dispositif de mesure d'une vitesse angulaire à l'aide d'un diapason. Des électrodes d'excitation et de détection sont placées sur chacune des branches du diapason. Afin de pouvoir mesurer la vitesse angulaire représentée par la composante utile du signal de détection, une correction mécanique des électrodes est réalisée afin que la partie représentant la composante parasite du signal de détection soit en quadrature avec le signal d'excitation et éliminée du signal de mesure par les moyens de traitement électronique.

La présente invention a pour but de remédier à ces inconvénients, en proposant un dispositif de mesure d'une vitesse angulaire basé sur l'utilisation de la force de Coriolis, permettant d'isoler et de déterminer la composante utile du signal de détection fourni par le transducteur.

Un autre but de l'invention est de proposer un dispositif de mesure du type précité, présentant une meilleure résolution lors de la mesure du signal utile détecté.

A cet effet, l'invention a pour objet un dispositif de mesure d'une vitesse angulaire comportant :

- un transducteur destiné à tourner à ladite vitesse angulaire,
- des moyens pour générer une vibration mécanique dudit transducteur en réponse à un signal d'excitation, cette vibration mécanique comportant une composante parasite, et au moins une composante utile ayant une amplitude représentative de ladite vitesse angulaire,
- des moyens pour produire un signal électrique de détection représentatif de ladite vibration mécanique et comportant également une composante parasite et au moins une composante utile ayant une amplitude représentative de ladite vitesse angulaire, et
- des moyens de traitement pour obtenir à partir dudit signal électrique de détection un signal de mesure analogique de la vitesse angulaire,

caractérisé en ce que les moyens de traitement comportent des déphaseurs pour déphaser le signal d'excitation et le signal de détection d'une valeur correspondant à leur déphasage initial, et des moyens pour mélanger les signaux de détection et d'excitation déphasés pour éliminer la composante parasite du signal de détection afin que l'amplitude du signal de mesure analogique soit proportionnelle à l'amplitude de la composante utile du signal de détection qui est représentative de la vitesse angulaire.

Avantageusement, ces moyens de traitement analogique du signal comportent un filtre passe-bas, connecté en sortie du mélangeur, et sa fréquence de coupure est choisie pour éliminer les composantes du signal mélangé de fréquence supérieure à la fréquence du signal d'excitation. En outre, des amplificateurs et des filtres passe-tout utilisés comme déphaseurs sont connectés en amont du mélangeur, pour supprimer la dépendance du signal de mesure par rapport à un déphasage initial entre le signal d'excitation et le signal de détection, de sorte que l'amplitude du signal de sortie résultant représente une valeur proportionnelle à la vitesse angulaire à mesurer.

De préférence, les moyens de traitement comportent des moyens pour mélanger respectivement le signal d'excitation et le signal de détection avec un signal de référence, associés à des moyens de filtrage passe-bas et à des moyens déphaseurs, de façon à produire un signal de sortie dont l'amplitude est fonction de la vitesse angulaire, et de l'amplitude du signal de référence, tout en étant indépendante de la composante parasite du signal de détection. Dans ce cas, le signal de référence est choisi avec une amplitude suffisamment élevée, apte à augmenter la résolution du signal de mesure de la vitesse angulaire.

Les objets et caractéristiques de l'invention vont être décrits plus en détail et à titre d'exemple non limitatif en liaison avec les dessins, dans lesquels :

- la Figure 1A est une vue en coupe longitudinale d'un diapason tel que ceux utilisés dans certains gyromètres ;
- la figure 1B est une vue en coupe transversale I-I des branches d'excitation (E) et de détection (D) du diapason de la figure 1A ;
- la figure 2 est une vue schématique du dispositif de mesure d'une vitesse angulaire selon l'invention ;
- la figure 3 est une vue plus détaillée d'un premier mode de réalisation du dispositif de mesure d'une vitesse angulaire selon l'invention, et
- la figure 4 est une vue schématique d'un autre mode de réalisation du dispositif de mesure d'une vitesse angulaire selon l'invention.

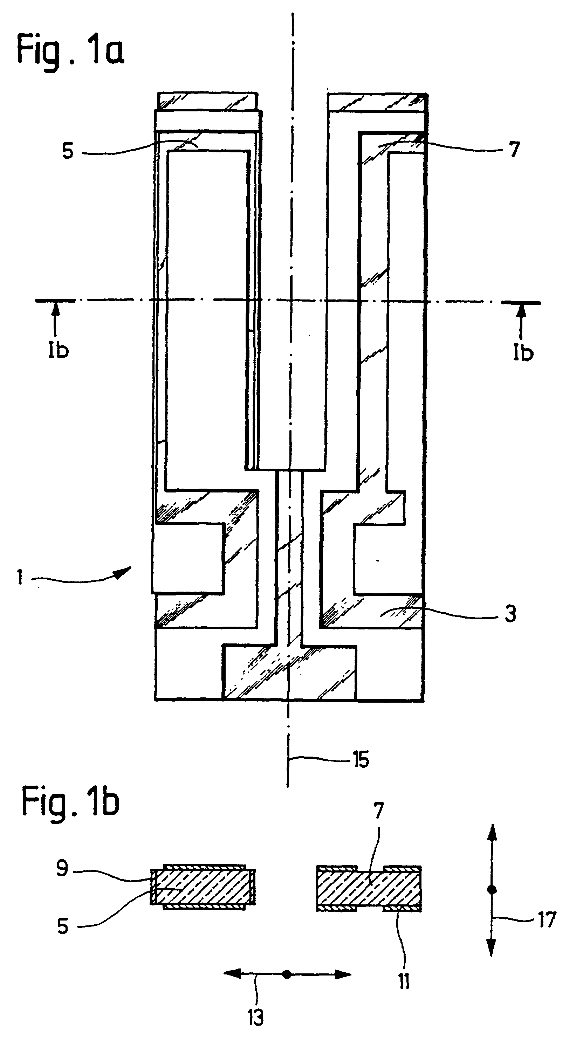

On se réfère à la figure 1. On a représenté dans cette figure un exemple de diapason 1 du type de ceux utilisables dans un gyromètre. Le diapason 1 représenté en coupe longitudinale dans la figure 1A comporte principalement une base 3 solidaire de deux branches 5, 7, l'ensemble étant réalisé en un matériau de quartz piézo-électrique. Comme représenté en coupe transversale agrandie selon la figure 1B, chaque branche 5, 7 comporte des électrodes 9, 11. La branche d'excitation (E) 5 comporte des électrodes d'excitation 9, une seule des quatre électrodes représentées étant référencée, permettant l'application d'un signal électrique ± V qui permet d'exciter et par conséquent de faire vibrer mécaniquement les branches 5, 7 du diapason 1 dans un premier plan, comme indiqué par les flèches 13. La branche de détection (D) 7 comporte des électrodes de détection 11, une seule des quatre électrodes représentées étant référencée, qui permettent de transformer les vibrations mécaniques de la branche de détection en un signal électrique détecté.

Selon la théorie des gyromètres à diapason, un mouvement en rotation angulaire du diapason 1 autour de son axe longitudinal 15 pendant qu'un signal d'excitation est appliqué sur l'électrode d'excitation (E) 9, génère une force de Coriolis perpendiculaire à l'excitation, et par conséquent une vibration d'au moins la branche de détection (D) 7 dans un plan perpendiculaire au plan correspondant à la vibration d'excitation, comme indiqué par la flèche 17.

Cette vibration mécanique est transformée par le quartz piézo-électrique du diapason 1 en un signal électrique qui est détecté par les électrodes de détection 11 du diapason 1.

Dans la présente invention, on n'abordera pas le problème du positionnement des électrodes d'excitation 9 et de détection 11 sur les branches du diapason 1 permettant de générer une réponse électrique optimale du diapason, ce problème ayant été abordé et résolu dans des documents précités de l'état antérieur de la technique. En revanche, la présente invention s'intéresse au procédé de traitement électronique des signaux électriques d'excitation et de détection, et aux moyens qui y sont associés, pour isoler et mesurer la composante utile du signal de détection, c'est-à-dire la composante due à la force de Coriolis, et ceci avec une résolution et une vitesse suffisantes pour permettre l'utilisation du diapason dans de nouvelles applications.

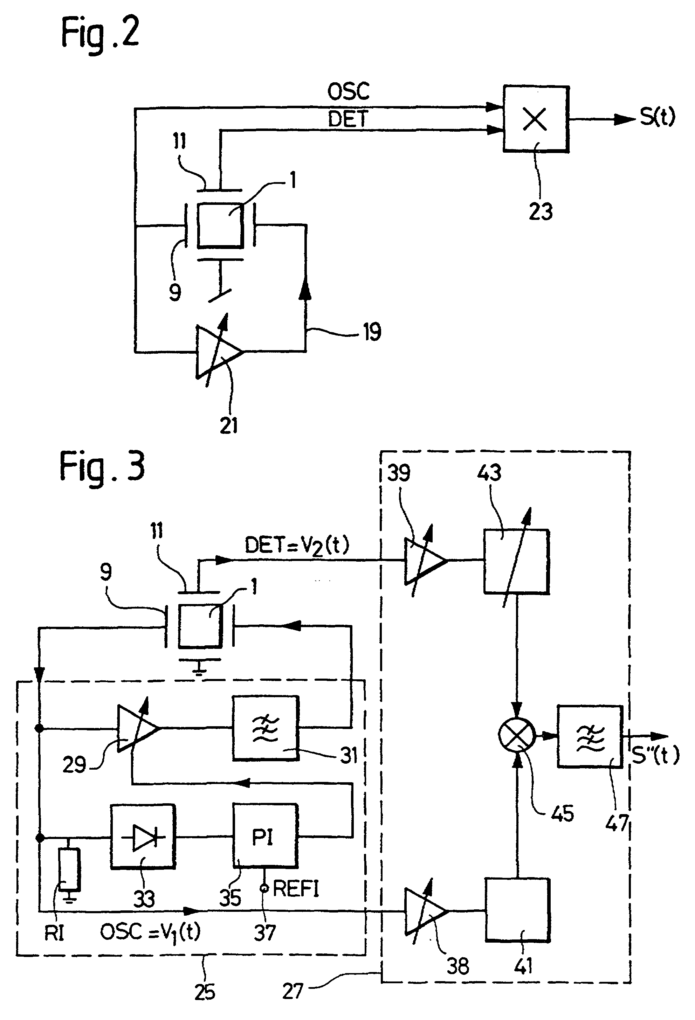

A cet effet, on se réfère à la figure 2, où est représenté de façon schématique un diapason 1 conforme à celui de la figure 1, associé à des circuits électroniques de traitement du signal d'excitation et du signal de détection.

De façon connue en soi, les électrodes d'excitation 9 du diapason 1 sont intégrées à un circuit résonateur schématisé par la boucle 19 et alimenté en courant constant par un amplificateur 21, et le signal de détection DET est prélevé aux bornes des électrodes de détection 11.

Pour simplifier les considérations qui vont suivre, on admettra que le signal d'excitation (OSC) est sinusoïdal, et que le signal de détection (DET) correspond à la superposition d'une composante parasite déphasée d'un angle $\varphi_0$ par rapport au signal d'excitation, et d'une composante utile correspondant à la force de Coriolis. Dans ces conditions, les signaux OSC et DET satisfont aux équations suivantes :

$$(1) \qquad OSC = A \cdot \sin(\omega_0 t + \varphi_0),$$

où A est l'amplitude du signal d'excitation, $\omega_0$ sa pulsation et $\varphi_0$ son déphasage initial par rapport au signal de détection, et :

$$(2) \qquad DET = B \cdot \sin(\omega_0 t) + C \cdot \cos(\omega_0 t),$$

dans laquelle le premier terme représente un signal parasite issu du couplage capacitif et mécanique entre les branches du diapason, et le second terme représente le signal utile dû à la force de Coriolis, dont l'amplitude C que l'on cherche à mesurer est proportionnelle à la vitesse de rotation $\Omega$ du diapason.

On note par ailleurs que le déphasage $\varphi_0$ entre le signal d'excitation OSC et le signal de détection DET, constant pour un diapason donné, est typiquement de l'ordre de 56° pour un diapason tel que celui représenté en figure 1.

Le signal de détection DET apparaît comme un signal modulé en phase, pouvant être réécrit selon l'équation

$$(3) \qquad DET = \sqrt{(B^2 + C^2)} \cdot \sin(\varphi(t)),$$

avec $\varphi(t) = \omega_0 t + \psi$, et où $\psi = \arctan C/B$.

En pratique, on s'est aperçu que l'amplitude C de la composante utile du signal de détection est très inférieure, pour des vitesses de rotation $\Omega$ de l'ordre de 50°/s, à l'amplitude B de la composante de couplage parasite, de sorte que le rapport C/B est typiquement de l'ordre de 1/50, ce qui correspond à un angle de déphasage $\psi$ très faible, de l'ordre de 1°, difficile à mesurer et à utiliser pour déterminer la vitesse de rotation $\Omega$ du diapason 1.

En conséquence, il est prévu selon le principe de l'invention, d'effectuer un traitement analogique des signaux OSC et DET, permettant d'extraire plus aisément l'amplitude C de la composante utile du signal détecté.

Selon un premier mode de réalisation de l'invention, comme schématisé en figure 2 par le bloc 23, ce traitement analogique consiste à amener les signaux OSC et DET à un multiplieur analogique. Le signal résultant S(t) est conforme à la relation (4) suivante :

$$(4) \qquad S(t) = OSC \cdot DET = [A.\sin(\omega_0 t + \psi_0)] \cdot [B.\sin(\omega_0 t) + C \cdot \cos(\omega_0 t)]$$

Soit :

$$S(t) = A \cdot B/2[\cos\psi_0 - \cos(2\omega_0 t + \psi_0)] + A \cdot C/2[\sin(2\omega_0 t + \psi_0) + \sin\psi_0]$$

Selon l'invention, le mélange des signaux OSC et DET est suivi d'un filtrage passe-bas à l'aide de filtres ayant une fréquence de coupure appropriée pour éliminer les multiples de $\omega_0$. Si la pulsation $\omega_0$ est choisie pour correspondre à une fréquence de 8 kHz par exemple, il suffira de filtrer les composantes à 16 kHz de S(t). Il reste un signal S'(t) selon la relation (4) ci-dessous :

$$(5) \qquad S'(t) = A \cdot B/2 \cdot \cos\psi_0 + A \cdot C/2 \cdot \sin\psi_0.$$

De préférence, les signaux OSC et DET sont déphasés avant leur mélange, à l'aide de filtres passe-tout déphaseurs permettant de fixer leur déphasage à $\pi/2$. Lorsque OSC et DET sont ainsi en quadrature, leur mélange et filtrage donnent un signal S''(t) satisfaisant la relation (6): S''(t) = $A \cdot C/2$, dont l'amplitude est proportionnelle à l'amplitude C de la composante utile, représentative de la vitesse angulaire $\Omega(t)$ que l'on cherche à mesurer.

Il s'ensuit que la vitesse peut être déterminée, grâce au traitement analogique décrit ci-dessus, uniquement à partir de l'amplitude A du signal d'excitation OSC et de l'amplitude C de la composante utile du signal de détection DET, mais indépendamment de la composante parasite B du signal de détection.

On se réfère à la figure 3 où est donnée une représentation schématique d'un exemple de réalisation du dispositif électronique apte à générer le signal analogique S''(t) tel que défini ci-dessus, à partir du signal OSC = $V_1$(t) et DET = $V_2$(t).

Le dispositif électronique de la figure 3 comporte principalement un étage oscillateur 25 alimentant le diapason 1 avec un signal d'excitation OSC, et un étage 27 de traitement analogique, utilisant le signal de détection DET et le signal d'excitation OSC pour produire le signal de sortie S''(t) permettant la mesure de la vitesse angulaire du diapason.

L'étage oscillateur 25 comporte, de façon connue en soi, un amplificateur 29 dont la sortie est connectée à l'entrée d'un filtre passe-bas 31. Une boucle de contre-réaction comprenant un redresseur 33 en série avec un régulateur intégrateur de courant 35 utilisant une source de courant de référence 37 (REFI) mesure l'amplitude du signal d'excitation OSC et agit sur l'amplitude $A_o$ de l'amplificateur 29 pour maintenir constante cette amplitude et pour la régler à une valeur donnée, et permet ainsi de stabiliser le niveau du signal d'excitation OSC délivré par l'étage oscillateur. Une résistance R1 branchée entre l'entrée du redresseur 33 et la masse, permet d'obtenir une indication du courant qui circule dans le diapason 1.

L'étage de traitement analogique 27 comporte des amplificateurs 38, 39 respectivement du signal d'excitation OSC et du signal de détection DET. La sortie de ces amplificateurs est connectée à des moyens déphaseurs 41, 43, notamment sous la forme de filtres passe-tout, permettant de mettre en quadrature les signaux OSC et DET amplifiés. La sortie des déphaseurs 41, 43 est connectée à l'entrée d'un mélangeur analogique 45, qui délivre en sortie un signal mélangé conforme à l'équation (4) ci-dessus. Ce signal est transmis à un filtre passe-bas 47 qui élimine les fréquences multiples de la fréquence du signal d'excitation, et délivre un signal S''(t) conformément à l'équation (6) ci-dessus.

De préférence, afin d'augmenter la résolution $\Delta\Omega$ (°/s) du dispositif, l'invention prévoit l'utilisation d'une technique de double mélange des signaux d'excitation OSC et de détection DET, avec un troisième signal de référence REF d'amplitude plus élevée.

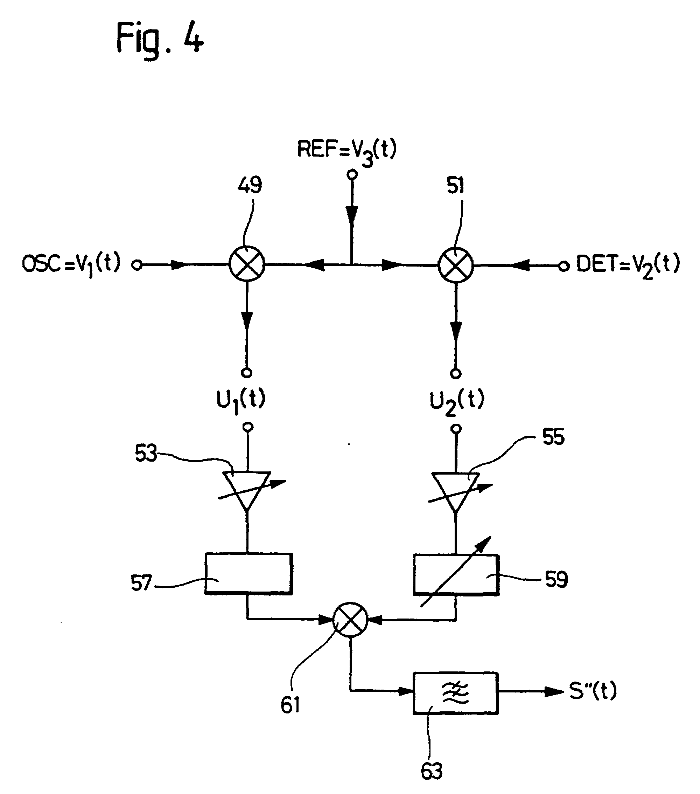

Ce mode de réalisation préféré de l'invention est schématisé en figure 4, dans laquelle seul l'étage de traitement des signaux OSC et DET a été représenté. Le signal OSC = $V_1$(t) est mélangé avec le signal REF = $V_3$(t) dans un mélangeur 49, le signal résultant étant indiqué par $U_1$(t). De même, le signal DET = $V_2$(t) est également mélangé dans un mélangeur 51 avec un signal de référence, notamment le même signal REF = $V_3$(t), le signal résultant étant indiqué par $U_2$(t). Les signaux $U_1$(t) et $U_2$(t) sont ensuite traités par des moyens d'amplification (53, 55) et déphasés par des moyens de déphasage sous la forme de filtres passe-tout (57, 59), d'une manière similaire à celle décrite en relation avec la figure 3, par les circuits de traitement analogiques correspondants. Puis les signaux provenant des filtres passe-tout 57, 59 sont transmis à un nouveau multiplieur 61, dont la sortie est transmise à un filtre passe-bas 63, délivrant le signal S''(t) de mesure de la vitesse angulaire du diapason 1.

En choisissant un signal de référence $V_3$(t) selon la relation (7) suivante :

$$(7) \qquad V_3(t) = R \cdot \cos[(\omega + \Delta\omega)t],$$

et en conservant pour les signaux OSC et DET les expressions précédentes, on obtient :

$$(8) \qquad U_1(t) = A \cdot R/2 \cdot \cos(\Delta\omega t - \varphi)$$

et

$$(9) \qquad U_2(t) = B \cdot R/2 \cdot \cos\Delta\omega t + C \cdot R/2 \cdot \sin\Delta\omega t$$

Puis après filtrage et déphasage comme expliqué plus haut, et mélange dans le mélangeur 61, on obtient S''(t) conforme à la relation (10) :

$$(10) \qquad S''(t) = A' \cdot C'/2,$$

où A' = A·R/2 et C' = C·R/2, soit :

$$(11) \qquad S''(t) = (A \cdot C/2) \cdot (R^2/4)$$

Il en résulte que le signal S''(t) de mesure de la vitesse angulaire de rotation du diapason 1 est, du fait de la technique de double mélange décrite plus haut, toujours proportionnel à l'amplitude C de la composante utile du signal de détection, mais est en outre multiplié par un terme ($R^2/4$) par rapport au mode de réalisation sans double mélange. Ainsi, il suffit de choisir un signal de référence d'amplitude R supérieure à 2 Volts pour augmenter l'amplitude du signal de mesure S''(t). Par conséquent, en choisissant un signal de référence REF d'amplitude suffisante, il est possible d'augmenter à volonté la résolution de la mesure de vitesse angulaire.

De plus, le dispositif selon l'invention peut être avantageusement utilisé en combinaison avec un circuit numérique d'un dispositif de mesure de vitesse angulaire tel que décrit dans le brevet européen EP-B-0 515 981 cité ci-dessus. C'est-à-dire, au moment ou on a mélangé les signaux $V_1(t)$ et $V_2(t)$ avec le signal de référence $V_3(t)$ pour obtenir le signal S''(t) conforme à la relation (10), au lieu de passer par un traitement analogique du signal tel que décrit ci-dessus, on fait passer le signal de sortie par un compteur pour numériser ce signal Comme cela a été expliqué dans ce brevet cité, le dispositif utilise un signal d'horloge de référence pour échantillonner le signal de mesure de la vitesse angulaire. La résolution du dispositif est déterminée par la relation entre la fréquence du signal de mesure de la vitesse angulaire et la fréquence du signal d'horloge. Plus la fréquence du signal de mesure est faible par rapport à la fréquence du signal d'horloge, meilleur est la résolution.

Toutefois, la fréquence du signal d'horloge est fixe, par exemple à 20 MHz, et ne peut pas facilement être changée sans impliquer une consommation augmentée du circuit numérique. Ainsi, il est souhaitable de pouvoir baisser la fréquence du signal de mesure de la vitesse angulaire. Or, le dispositif selon l'invention peut effectuer ceci au moyen du signal de référence REF. En effet, comme le signal S''(t) a une fréquence proportionnelle à ($\omega$-$\Delta\omega$), on peut choisir $\Delta\omega$ proche de $\omega$ de sorte que la fréquence du signal de mesure sera plus basse. Par exemple, si la fréquence du signal d'oscillation OSC est autour de 8 kHz, on choisit la fréquence du signal de référence REF autour de 7 kHz pour obtenir une fréquence du signal S''(t) d'autour de 1 kHz. Ainsi, la résolution sera augmentée d'un facteur 8 par rapport à la résolution qui peut être obtenue par le dispositif décrit dans le brevet EP-B-0 515 981 déjà cité.

De ce qui précède, il ressort que le dispositif de mesure de vitesse angulaire selon l'invention répond aux objectifs fixés, en permettant d'une part de délivrer un signal de sortie qui ne dépend plus que de la composante utile du signal de détection, et en permettant d'autre part, soit d'augmenter l'amplitude du signal de sortie, soit de baisser la fréquence du signal de sortie, pour augmenter la résolution de la mesure de vitesse angulaire.

**Revendications**

1. Dispositif de mesure d'une vitesse angulaire comportant :

   - un transducteur (1) destiné à tourner à ladite vitesse angulaire,
   - des moyens (9) pour générer une vibration mécanique dudit transducteur (1) en réponse à un signal d'excitation (OSC), cette vibration mécanique comportant une composante parasite, et au moins une composante utile ayant une amplitude représentative de ladite vitesse angulaire,
   - des moyens pour produire un signal électrique de détection (DET) représentatif de ladite vibration mécanique et comportant également une composante parasite et au moins une composante utile ayant une amplitude représentative de ladite vitesse angulaire, et
   - des moyens de traitement (23) pour obtenir à partir dudit signal électrique de détection (DET) un signal de mesure analogique (S'') de la vitesse angulaire,

   **caractérisé en ce que** les moyens de traitement comportent des déphaseurs (41,43; 57,59) pour déphaser le signal d'excitation (OSC) et le signal de détection (DET) d'une valeur correspondant à leur déphasage initial, et des moyens (45; 49, 51, 61) pour mélanger les signaux de détection (DET) et d'excitation (OSC) déphasés pour éliminer la composante parasite du signal de détection (DET) afin que l'amplitude du signal de mesure analogique (S'') soit proportionnelle à l'amplitude de la composante utile du signal de détection (DET) qui est représentative de la vitesse angulaire.

2. Dispositif selon la revendication 1, **caractérisé en ce que**, ledit transducteur (1) est un diapason quartz.

3. Dispositif selon la revendication 2, **caractérisé en ce que** lesdits moyens (23) de traitement analogique des signaux comportent un filtre passe-bas (47; 63), connecté en sortie desdits moyens pour mélanger (45; 61), et dont la fréquence de coupure est choisie de manière à éliminer les composantes du signal mélangé qui ont une fréquence supérieure à la fréquence du signal d'excitation.

4. Dispositif selon l'une quelconque des revendications précédentes, **caractérisé en ce qu'**il comporte des moyens d'amplification (38, 39; 53, 55) du signal d'excitation, du signal de détection, et/ou du signal de mesure.

5. Dispositif selon l'une quelconque des revendications précédentes, **caractérisé en ce que** lesdits moyens de traitement (23) comportent des moyens (49, 51) pour mélanger respectivement le signal d'excitation (OSC) et le signal de détection (DET) avec un signal de référence (REF), associés à des moyens de filtrage passe-bas (63) et/ou des moyens déphaseurs (57, 59), de façon à produire un signal de sortie (S'') dont l'amplitude est fonction de la vitesse angulaire du transducteur et de l'amplitude du signal de référence.

6. Dispositif selon l'une quelconque des revendications 1 à 4, **caractérisé en ce que** lesdits moyens de traitement (23) comportent des moyens (49, 51) pour mélanger respectivement le signal d'excitation (OSC) et le signal de détection (DET) avec un signal de référence (REF), associés à des moyens de filtrage passe-bas (63) et/ou des moyens déphaseurs (57, 59), de façon à produire un signal de sortie (S'') dont la fréquence est fonction de la vitesse angulaire du transducteur et de la fréquence du signal de référence.

7. Procédé pour mesurer la vitesse angulaire d'un transducteur (1) soumis à une force de Coriolis du fait de son mouvement angulaire, comportant les étapes consistant à :

   - appliquer un signal électrique d'excitation (OSC) au transducteur (1), apte à générer en réponse un signal de détection (DET) comportant une composante utile représentative de la vitesse angulaire du transducteur (1), et une composante parasite;
   - détecter ledit signal de détection;

   **caractérisé en ce qu'**il comporte en outre les étapes consistant à :

   - déphaser le signal d'excitation (OSC) et le signal de détection (DET) d'une valeur correspondant au déphasage initial entre le signal d'excitation et le signal de détection, et
   - mélanger les signaux d'excitation (OSC) et de détection (DET) déphasés pour éliminer la composante parasite du signal de détection afin que l'amplitude du signal de mesure (S'') résultant soit proportionnelle à l'amplitude de la composante utile du signal de détection (DET) qui est représentative de la vitesse angulaire.

8. Procédé selon la revendication 7, **caractérisé en ce qu'**il comporte en outre l'étape consistant à :

   - éliminer par filtrage les composantes des signaux déphasés et du signal de mesure mélangé qui ont des fréquences supérieures à la fréquence du signal d'excitation, de façon à obtenir un signal de mesure (S'') dont l'amplitude est une fonction de la vitesse angulaire.

9. Procédé pour mesurer la vitesse angulaire d'un transducteur (1) soumis à une force de Coriolis du fait de son mouvement angulaire, comportant les étapes consistant à :

   - appliquer un signal électrique d'excitation (OSC) au transducteur (1), apte à générer en réponse un signal de détection (DET) comportant une composante utile représentative de la vitesse angulaire du transducteur (1), et une composante parasite;
   - détecter ledit signal de détection;

   **caractérisé en ce qu'**il comporte en outre les étapes consistant à :

   - mélanger les signaux d'excitation (OSC) et de détection (DET) avec un signal de référence (REF),
   - déphaser les signaux mélangés d'une valeur correspondant au déphasage initial entre le signal d'excitation et le signal détecté,
   - filtrer les signaux mélangés et déphasés, de façon à éliminer les composantes de ces signaux qui ont des fréquences supérieures à la fréquence du signal d'excitation, et
   - mélanger les signaux filtrés obtenus pour éliminer la composante parasite du signal de détection (DET) de façon à obtenir un signal de sortie, et filtrer ledit signal de sortie pour que l'amplitude du signal de mesure (S'') résultant soit proportionnelle à l'amplitude de la composante utile du signal de détection (DET) qui est représentative de la vitesse angulaire.

**Patentansprüche**

1. Vorrichtung zum Messen einer Winkelgeschwindigkeit, die umfaßt:

- einen Meßwandler (1), der dazu bestimmt ist, sich mit dieser Winkelgeschwindigkeit zu drehen,
- Mittel (9) zum Erzeugen einer mechanischen Schwingung des Meßwandlers (1) als Antwort auf ein Erregungssignal (OSC), wobei diese mechanische Schwingung eine parasitäre Komponente und wenigstens eine Nutzkomponente enthält, die eine Amplitude besitzt, die die Winkelgeschwindigkeit darstellt,
- Mittel, die ein elektrisches Erfassungssignal (DET) erzeugen, das die mechanische Schwingung darstellt und ebenfalls eine parasitäre Komponente und wenigstens eine Nutzkomponente enthält, die eine Amplitude besitzt, die die Winkelgeschwindigkeit darstellt, und
- Verarbeitungsmittel (23), die anhand des elektrischen Erfassungssignals (DET) ein analoges Meßsignal (S") der Winkelgeschwindigkeit gewinnen,

**dadurch gekennzeichnet, daß** die Verarbeitungsmittel Phasenschieber (41, 43; 57, 59), die die Phase des Erregungssignals (OSC) und des Erfassungssignals (DET) um einen Wert verschieben, der ihrer anfänglichen Phasenverschiebung entspricht, sowie Mittel (45; 49, 51, 61) umfassen, die das Erfassungssignal (DET) und das Erregungssignal (OSC), die phasenverschoben sind, mischen, um die parasitäre Komponente des Erfassungssignals (DET) zu beseitigen, damit die Amplitude des analogen Meßsignals (S") zur Amplitude der Nutzkomponente des Erfassungssignals (DET), die die Winkelgeschwindigkeit darstellt, proportional ist.

2. Vorrichtung nach Anspruch 1, **dadurch gekennzeichnet, daß** der Meßwandler (1) ein Stimmgabel-Quarz ist.

3. Vorrichtung nach Anspruch 2, **dadurch gekennzeichnet, daß** die analogen Signalverarbeitungsmittel (23) ein Tiefpaßfilter (47; 63) umfassen, das an den Ausgang der Mischungsmittel (45; 61) angeschlossen ist und dessen Kappungsfrequenz in der Weise gewählt ist, daß die Komponenten des gemischten Signals beseitigt werden, die eine Frequenz oberhalb der Frequenz des Erregungssignals besitzen.

4. Vorrichtung nach einem der vorhergehenden Ansprüche, **dadurch gekennzeichnet, daß** sie Mittel (38, 39; 53, 55) zum Verstärken des Erregungssignals, des Erfassungssignals und/oder des Meßsignals umfaßt.

5. Vorrichtung nach einem der vorhergehenden Ansprüche, **dadurch gekennzeichnet, daß** die Verarbeitungsmittel (23) Mittel (49, 51) umfassen, die das Erregungssignal (OSC) und das Erfassungssignal (DET) mit einem Referenzsignal (REF) mischen und denen Tiefpaß-Filtermittel (63) und/oder Phasenverschiebungsmittel (57, 59) zugeordnet sind, derart, daß ein Ausgangssignal (S") erzeugt wird, dessen Amplitude von der Winkelgeschwindigkeit des Meßwandlers und von der Amplitude des Referenzsignals abhängt.

6. Vorrichtung nach einem der Ansprüche 1 bis 4, **dadurch gekennzeichnet, daß** die Verarbeitungsmittel (23) Mittel (49, 51) enthalten, die das Erregungssignal (OSC) bzw. das Erfassungssignal (DET) mit einem Referenzsignal (REF) mischen und denen Tiefpaß-Filtermittel (63) und/oder Phasenverschiebungsmittel (57, 59) zugeordnet sind, derart, daß ein Ausgangssignal (S") erzeugt wird, dessen Frequenz von der Winkelgeschwindigkeit des Meßwandlers und von der Frequenz des Referenzsignals abhängt.

7. Verfahren zum Messen der Winkelgeschwindigkeit eines Meßwandlers (1), der aufgrund seiner Winkelbewegung einer Coriolis-Kraft unterliegt, das die Schritte umfaßt, die darin bestehen:

- in den Meßwandler (1) ein elektrisches Erregungssignal (OSC) einzugeben, damit dieser als Antwort darauf ein Erfassungssignal (DET) erzeugt, das eine die Winkelgeschwindigkeit des Meßwandlers (1) darstellende Nutzkomponente sowie eine parasitäre Komponente enthält;
- das Erfassungssignal zu erfassen;

**dadurch gekennzeichnet, daß** es außerdem die Schritte umfaßt, die darin bestehen:

- die Phase des Erregungssignals (OSC) und des Erfassungssignals (DET) um einen Wert zu verschieben, der der anfänglichen Phasenverschiebung zwischen dem Erregungssignal und dem Erfassungssignal entspricht, und
- das Erregungssignal (OSC) und das Erfassungssignal (DET), die phasenverschoben sind, zu mischen, um die parasitäre Komponente des Erfassungssignals zu beseitigen, damit die Amplitude des resultierenden Meßsignals (S") zur Amplitude der Nutzkomponente des Erfassungssignals (DET), die die Winkelgeschwindigkeit darstellt, proportional ist.

8. Verfahren nach Anspruch 7, **dadurch gekennzeichnet, daß** es außerdem den Schritt umfaßt, der darin besteht:

- durch Filtern diejenigen Komponenten der phasenverschobenen Signale und des gemischten Meßsignals, die Frequenzen oberhalb der Frequenz des Erregungssignals besitzen, zu beseitigen, um ein Meßsignal (S") zu erhalten, dessen Amplitude eine Funktion der Winkelgeschwindigkeit ist.

9. Verfahren zum Messen der Winkelgeschwindigkeit eines Meßwandlers (1), der aufgrund seiner Winkelbewegung einer Coriolis-Kraft unterliegt, das die Schritte umfaßt, die darin bestehen:

   - an den Meßwandler (1) ein elektrisches Erregungssignal (OSC) anzulegen, damit dieser als Antwort darauf ein Erfassungssignal (DET) erzeugen kann, das eine die Winkelgeschwindigkeit des Meßwandlers (1) darstellende Nutzkomponente sowie eine parasitäre Komponente enthält;
   - das Erfassungssignal zu erfassen;

   **dadurch gekennzeichnet, daß** es außerdem die Schritte umfaßt, die darin bestehen:

   - das Erregungssignal (OSC) und das Erfassungssignal (DET) mit einem Referenzsignal (REF) zu mischen,
   - die Phase der gemischten Signale um einen Wert zu verschieben, der der anfänglichen Phasenverschiebung zwischen dem Erregungssignal und dem erfaßten Signal entspricht,
   - die gemischten und phasenverschobenen Signale zu filtern, derart, daß diejenigen Komponenten dieser Signale beseitigt werden, die Frequenzen oberhalb der Frequenz des Erregungssignals besitzen, und
   - die erhaltenen gefilterten Signale zu mischen, um die parasitäre Komponente des Erfassungssignals (DET) zu beseitigen, derart daß ein Ausgangssignal erhalten wird, und das Ausgangssignal zu filtern, damit die Amplitude des resultierenden Meßsignals (S") zur Amplitude der Nutzkomponente des Erfassungssignals (DET), die die Winkelgeschwindigkeit darstellt, proportional ist.

## Claims

1. Angular speed measuring device comprising :

   - a transducer (1) intended to rotate at said angular speed ;
   - means (9) for generating a mechanical vibration of said transducer (1) in response to an excitation signal (OSC), this mechanical vibration comprising a parasite component and at least one useful component having an amplitude which is representative of said angular speed ;
   - means for producing an electric detection signal (DET) representative of said mechanical vibration and also comprising a parasite component and at least one useful component having an amplitude which is representative of said angular speed ;
   - processing means (23) for obtaining from said electric detection signal (DET), an analog measurement signal (S") of the angular speed ;

   **characterized in that** the processing means (23) include phase-shifting means (41, 43; 57, 59) for phase-shifting the excitation signal (OSC) and the detection signal (DET) by a value which corresponds to their initial phase-shift, and means (45; 49, 51, 61) for mixing the phase-shifted detection (DET) and excitation (OSC) signals for eliminating the parasite component of the detection signal (DET) so that the amplitude of the analog measurement signal (S") is proportional to the useful component amplitude of the detection signal (DET) which is representative of the angular speed.

2. Device according to claim 1, **characterized in that** said transducer (1) is a quartz tuning fork.

3. Device according to claim 2, **characterized in that** said analog processing means (23) of the signals comprises a low-pass filter (47; 63), connected to the output of said means for mixing (45; 61), and having a cut-off frequency which is chosen in such a way so as to eliminate the components of the mixed signal which have a frequency superior to the frequency of the excitation signal.

4. Device according to any one of the preceding claims, **characterized in that** it comprises amplifying means (38, 39; 53, 55) of the excitation signal, of the detection signal, and/or of the measurement signal.

5. Device according to any one of the preceding claims, **characterized in that** said processing means (23) comprise means (49, 51) for respectively mixing the excitation signal (OSC) and the detection signal (DET) with a reference signal (REF), said means being associated to low-pass filtering means (63) and/or to phase-shifting means (57, 59), in such a way so as to produce an output signal (S") the amplitude of which is a function of the angular speed of the transducer and of the amplitude of the reference signal.

6. Device according to any one of the claims 1 to 4, **characterized in that** said processing means (23) comprise means (49, 51) for respectively mixing the excitation signal (OSC) and the detection signal (DET) with a reference signal (REF), said means being associated to low-pass filtering means (63) and/or to phase-shifting means (57, 59), in such a way so as to produce an output signal (S") the frequency of which is a function of the angular speed of the transducer and of the frequency of the reference signal.

7. Method of measuring the angular speed of a transducer (1) which undergoes a Coriolis force due to its angular movement, comprising the followings steps :

- applying an electric excitation signal (OSC) to the transducer (1) capable of generating in response a detection signal (DET) which comprises a useful component representative of the angular speed of the transducer and which comprises a parasite component ;
- detecting said detection signal ;

**characterized in that** said method further comprises the following steps :

- phase-shifting the excitation signal (OSC) and the detection signal (DET) by a value which corresponds to the initial phase-shift between the excitation signal and the detection signal, and
- mixing the phase-shifted excitation (OSC) and detection (DET) signals for eliminating the parasite component of the detection signal (DET) so that the amplitude of the resulting measurement signal (S") is proportional to the useful component amplitude of the detection signal (DET) which is representative of the angular speed.

8. Method according to claim 7, **characterized in that** it further comprises the following step :

- eliminating by filtering the components of the phase-shifted signals and of the mixed measurement signal which have a frequency superior to the frequency of the excitation signal, so as to obtain a measurement signal (S") the amplitude of which is a function of the angular speed.

9. Method of measuring the angular speed of a transducer (1) undergoing a Coriolis force due to its angular movement, comprising the following steps :

- applying an electric excitation signal (OSC) to the transducer (1) capable of generating in response a detection signal (DET) comprising a useful component which is representative of the angular speed of the transducer (1), and comprising a parasite component ;
- detecting said detection signal ;

**characterized in that** it further comprises the following steps :

- mixing the excitation signal (OSC) and the detection signal (DET) with a reference signal (REF) ;
- phase-shifting the mixed signals by a value which corresponds to the initial phase-shift between the excitation signal and the detection signal ;
- filtering the mixed and phase-shifted signals so as to eliminate the components of these signals which have a frequency superior to the frequency of the excitation signal, and
- mixing the obtained filtered signals for eliminating the parasite component of the detection signal (DET) so as to obtain an output signal, and filtering said output signal so that the amplitude of the resulting measurement signal (S") is proportional to the useful component amplitude of the detection signal (DET) which is representative of the angular speed.

Fig. 1a

5

7

Ib

Ib

1

3

15

Fig. 1b

9

5

7

11

13

17

# Fig.2

OSC

DET

11

1

9

19

21

23

S(t)

# Fig.3

11

DET=$V_2(t)$

39

43

9

1

29

31

33

35

PI

REFI

RI

OSC =$V_1(t)$

37

25

27

38

41

45

47

S''(t)

# Fig. 4